# EUROPEAN PATENT APPLICATION

(11) **EP 4 523 531 A1**
(43) Date of publication of application: **19.03.2025**
(21) Application number: 24185021.3
(22) Date of filing: 27.06.2024
(51) Int. Cl.: A01N 25/06, A01P 7/04, A01M 1/20

(54) **SPRAY PRODUCT FOR PEST CONTROL**

(30) Priority: 18.09.2023 DE 102023209039
(71) Applicant: Henkel AG & Co. KGaA, 40589 Düsseldorf (DE)
(72) Inventor: Moreno Gomez, Mara, 08207 Barcelona (ES); Monsonis Guell, Eduard, 08023 Barcelona (ES); Rovinetti, Matteo, 20010 Santo Stefano Ticino (Ml) (IT); Cortes Barea, Jordi, 08203 Sabadell (ES)

(57) **Abstract**

The present invention relates to a product for repelling, knocking down or killing insects, comprising a pressure-resistant container equipped with a spray valve and a spray button having a spray outlet connected to the spray valve, the container containing the liquid aerosol-forming material, wherein the liquid aerosol-forming material is anhydrous and comprises at least one pest control active and a specific propellant/solvent mixture, which brings about improved application properties, especially with regard to reduction of residues of the spray.

The present invention also relates to the use of the aforementioned product for repelling, knocking down or killing insects, especially mosquitoes, flies, mites, fleas, roaches, ticks, ants, moths, silverfish and other flying or crawling insects.

## Description

The present invention relates to a product for repelling, knocking down or killing insects, comprising a pressure-resistant container equipped with a spray valve and a spray button having a spray outlet connected to the spray valve, the container containing the liquid aerosol-forming material, wherein the liquid aerosol-forming material is anhydrous and comprises at least one pest control active and a specific propellant/solvent mixture, which brings about improved application properties, especially with regard to reduction of residues of the spray.

The present invention also relates to the use of the aforementioned product for repelling, knocking down or killing insects, especially mosquitoes, flies, mites, especially dust mites, fleas, roaches, ticks, ants, moths, silverfish and other flying or crawling insects.

Pests, such as mosquitoes, flies, mites, fleas, roaches, ticks, ants, moths, silverfish and other flying or crawling insects, are known to be a nuisance to mankind. Insects that may invade the human habitat are not only a nuisance, but also represent a health hazard.

Most of them are disease carriers and pose significant problems for man in both the economic and health care sectors. Accordingly, to kill, repel and/or control pests, insecticides or repellents are used in areas where the presence of these pests is not desired. Many efforts have been made to keep insects away from the human body and living spaces.

One typically and conventionally applied method of insect eradication is the use of insecticides and/or repellents.

There are techniques of getting rid of flying insect pests, e.g., vaporizing and diffusing a chemical including an insecticidal component from a carrier impregnated with the chemical into a treatment space; directly spraying the chemical to flying or crawling insect pests; previously spraying the chemical to a place where flying insect or crawling insect pests are likely to come; etc. In this regard, aerosol insecticides including an insecticidal and/or insect repellent active have been developed as products for getting rid of flying insect pests or crawling insect pests. A pest control product that can distribute an insecticidal and/or insect repellent active as aerosol can be used to easily spray the insecticidal or insect repellent active into a treatment space, and therefore, is widely used as a convenient product.

US4295581A discloses an oil-based insecticidal aerosol formulation comprising a pressure-proof container equipped with a valve having a housing, button, stem and vapor tap, filled with a solution of an active ingredient in mineral oil, specifically kerosenes having a boiling point of 180 to 260 °C, and a liquified petroleum gas as a propellant. JP2009126804A discloses water-based pest sprays for humans containing a pest control active, one or more selected from C2-C6 alcohols and/or glycols, and natural mineral water.

These known pest sprays have the main disadvantage that they produce rather large aerosol droplets, which rapidly sink down and leave ugly residue spots on treated hard, inanimate surfaces, e. g. on the floor of the rooms, where the pest control active had been spatially sprayed. The rapid sinking of the droplets leads to an irregular distribution pattern of the pest control active in the room to be treated. The pest control active is concentrated in the lower part of the room, while at least flying insects usually stay in the upper parts of the room.

### Technical Problem

With the above problems in mind, the present invention has been made. It is an object of the present invention to provide a pest control aerosol, especially for controlling mosquitoes, flies, mites, fleas, roaches, ticks, ants, moths, silverfish and other flying or crawling insects, which can maintain the effect of significantly controlling these insect pests, particularly mosquitoes, flies, mites, fleas, roaches, ticks, ants, moths, silverfish and other flying or crawling insects, for a long period of time while reducing residues on surfaces.

### Solution to Problem

The benefit of using the inventive anhydrous liquid aerosol-forming material instead of oil-based solvents or water-based compositions, known from the prior art lie in that the anhydrous liquid aerosol-forming material is more volatile. Therefore, the droplets in the air will reduce their size faster than the standard aerosols, allowing the pest control formula staying in the air for longer time. Also, when the droplets of the inventive aerosol reach a surface, they will evaporate and dry much faster than a composition known in the art. If the inventive aerosol is sprayed to a surface from a very low distance, this surface will get wet, but it will dry much faster than with any formula of the art, as organic oil-based solvents will not evaporate as fast as the inventive anhydrous liquid aerosol-forming material.

A first object of the present invention is a product for repelling, knocking down or killing insects, comprising
a pressure-resistant container equipped with a spray valve and a spray button having a spray outlet connected to the spray valve,
the container containing the liquid aerosol-forming material,
wherein the liquid aerosol-forming material is anhydrous and comprises
   i) at least one pest control active
   ii) a propellant, selected from one or more alkanes or alkenes with 3 or 4 carbon atoms each, and
   iii) additionally an organic solvent, which essentially consists of propan-2-ol,
characterized in that the liquid, anhydrous aerosol-forming material comprises 25 to 45 weight-% of propan-2-ol, all quantities referring to the total weight of the liquid aerosol-forming material in the pressure-resistant container.

A second object of the present invention is the use of a product, comprising a pressure-resistant container equipped with a spray valve and a spray button having a spray outlet connected to the spray valve, the container containing the liquid aerosol-forming material,
wherein the liquid aerosol-forming material is anhydrous and comprises
i) at least one pest control active,
ii) a propellant, selected from one or more alkanes or alkenes with 3 or 4 carbon atoms each, and
iii) additionally an organic solvent, which essentially consists of propan-2-ol in a quantity of 25 to 45 weight-%, all quantities referring to the total weight of the liquid aerosol-forming material in the pressure-resistant container,
for repelling, knocking down or killing insects.

A third object of the present invention is a method for repelling, knocking down or killing insects, characterized in that an anhydrous liquid aerosol-forming material, comprising
i) at least one pest control active,
ii) a propellant, selected from one or more alkanes or alkenes with 3 or 4 carbon atoms each, and
iii) additionally an organic solvent, which essentially consists of propan-2-ol in a quantity of 25 to 45 weight-%, all quantities referring to the total weight of the liquid aerosol-forming material in the pressure-resistant container,
is set free into a space or onto an inanimate surface to be treated against insects from a pressure-resistant container equipped with a spray valve and a spray button having a spray outlet connected to the spray valve, the container containing the liquid aerosol-forming material.

The liquid aerosol-forming material is anhydrous. According to the invention, "anhydrous" means that the liquid aerosol-forming material comprises, referring to its weight, 0 to 10 weight-%, preferably 0.5 to 8 weight-%, more preferably 1.0 to 5.0 weight-% water. The water content mainly results from the inherent water content of the propan-2-ol, when it is used in commercially available qualities.

The can filling, which consists of the liquid aerosol filling, is liquid at a temperature of 20 °C and at a pressure in the range of 200 kPa to 5 MPa (2 bar to 50 bar), preferably 300 kPa to 800 kPa (3 bar to 8 bar).

A "pest control active" in the sense of the current is an active that effects repelling, knocking down or killing insects, especially flying insects or crawling insects or both.

An insect repellent is a substance applied to the skin, clothing, or other surfaces to discourage insects (and arthropods in general) from landing or climbing on that surface. Insect repellents help prevent and control the outbreak of insect-borne (and other arthropod-borne) diseases such as malaria, Lyme disease, dengue fever and West Nile fever. Pest animals commonly serving as vectors for disease include insects such as mosquitoes, fleas, flies and ticks (arachnids).

Some insect repellents are insecticides, but most simply discourage insects and send them flying or crawling away. Nearly any would be fatal upon reaching the median lethal dose, but classification as an insecticide implies death even at lower doses.

Preferred products for repelling, knocking down or killing insects according to the invention are characterized in that the pest control active, preferably the repellent active, is selected from metofluthrin, transfluthrin, pyrethrum, i.e. the powder made from the dried flower heads of *Chrysanthemum cinerariifolium* or *Chrysanthemum* coccineum, extracts from the flowers of *Chrysanthemum* spp. (formerly *Pyrethrum* spp.), preferably selected from oily extracts of the flowers of *Chrysanthemum* spp. and extracts of the flowers of *Chrysanthemum* spp. with supercritical CO₂, furthermore pyrethrin I, cinerin I, jasmolin I, pyrethrin II, cinerin II, jasmolin II, pyrethroids, preferably profluthrin, empenthrin, phthalthrin, resmethrin, cyfluthrin, phenothrin, permethrin, cyphenothrin, cypermethrin, allethrin, prallethrin, furamethrin, imiprothrin, etofenprox and silafluofen, furthermore dichlorvos, fenitrothion, propoxur, benzaldehyde, butopyronoxyl, N,N-diethyl-3-methylbenzamide (DEET), N,N-diethyl-phenylacetamide (DEPA), methyl anthranilate, dimethyl carbate (Dimethyl (1R,2S,3R,4S)-bicyclo[2.2.1]hept-5-ene-2,3-dicarboxylate), dimethyl phthalate, 3-[N-n-butyl-N-acetyl]-aminopropionic acid ethyl ester, icaridine (1-piperidinecarboxylic acid 2-(2-hydroxyethyl)-1-methylpropyl ester, KBR 3023), MGK repellent 11 (4,5a,6,9,9a,9b-hexahydro-1 H-dibenzofuran-4a-carbaldehyde), tricyclodecenyl allyl ether, extracts from *Callicarpa americana* leaves, extracts from *Myrica Gale,* nepetalactone, 2-undecanone, Citronella oil, *Corymbia citriodora* oil, p-menthane-3,8-diol, extracts from lemongrass, neem oil, tea tree oil, tobacco leaves extracts, extracts from Achillea alpina, alpha-terpinene, extracts from Andrographis paniculata, SS220 ((1S,2'S)-Methylpiperidinyl-3-cyclohexen-1-carboxamid)), extracts from *Ocimum basilicum* leaves, male inflorescences of breadfruit (*Artocarpus altilis* (Parkinson) Fosberg), camphor, carvacrol, castor oil, cedar oil, extracts from *Apium graveolens* (celery), leaf oil of *Cinnamomum osmophloeum,* bark oil from *Cinnamomum cassia,* cinnamaldehyde, citronella oil, citronellol, geraniol, D-limonene, essential oils of *Syzygium aromaticum,* Eucalyptus oil, eucalyptol, oil from *Foeniculum vulgare* (fennel), extracts from *Allium sativum,* allicin, essential oils of *Pelargonium graveolens,* hinokitiol, lavender oil, essential oils of *Corymbia citriodora,* p-menthane-3,8-diol, essential oils of *Cymbopogon* species, linalool, extracts from *Tagetes* species, essential oils of *Majorana hortensis,* essential oils of *Rosmarinus officinalis* L., menthol and its isomers, preferably (-)-menthol, neem oil (*Azadirachta indica*), nootkatone, oleic acid, pulegone, menthone, essential oils of *Mentha piperita,* essential oils of *Mentha pulegium,* extracts of *Lantana camara,* preferably oily extracts of *Lantana camara* flowers, essential oils of the leaves of *Melaleuca alternifolia* (Tea tree oil), essential oils of *Thymus* species, juice of *Solanum villosum* berries, as well as mixtures of the aforementioned substances.

More preferred products for repelling, knocking down or killing insects according to the invention are characterized in that the pest control active, preferably the repellent active, is selected from metofluthrin, transfluthrin, pyrethrum, i.e. the powder made from the dried flower heads of *Chrysanthemum* cinerariifolium or *Chrysanthemum* coccineum, extracts from the flowers of *Chrysanthemum* spp. (formerly *Pyrethrum* spp.), preferably selected from oily extracts of the flowers of *Chrysanthemum* spp. and extracts of the flowers of *Chrysanthemum* spp. with supercritical CO₂, furthermore pyrethrin I, cinerin I, jasmolin I, pyrethrin II, cinerin II, jasmolin II, pyrethroids, preferably profluthrin, empenthrin, phthalthrin, resmethrin, cyfluthrin, phenothrin, permethrin, cyphenothrin, cypermethrin, allethrin, prallethrin, furamethrin, imiprothrin, etofenprox and silafluofen, furthermore dichlorvos, *N,*N-diethyl-3-methylbenzamide (DEET), *N,N*-diethyl-phenylacetamide (DEPA), icaridine (1-piperidinecarboxylic acid 2-(2-hydroxyethyl)-1-methylpropyl ester, KBR 3023), MGK repellent 11 (4,5*a*,6,9,9*a*,9*b*-hexahydro-1*H*-dibenzofuran-4a-carbaldehyde) and SS220 ((1S,2'S)-Methylpiperidinyl-3-cyclohexen-1-carboxamid)), as well as mixtures of the aforementioned substances.

Even more preferred products for repelling, knocking down or killing insects according to the invention are characterized in that the pest control active, preferably the repellent active, is selected from metofluthrin, transfluthrin, pyrethrum, i.e. the powder made from the dried flower heads of *Chrysanthemum* cinerariifolium or *Chrysanthemum* coccineum, extracts from the flowers of *Chrysanthemum* spp. (formerly *Pyrethrum* spp.), preferably selected from oily extracts of the flowers of *Chrysanthemum* spp. and extracts of the flowers of *Chrysanthemum* spp. with supercritical CO₂, furthermore pyrethrin I, cinerin I, jasmolin I, pyrethrin II, cinerin II, jasmolin II, pyrethroids, preferably profluthrin, empenthrin, phthalthrin, resmethrin, cyfluthrin, phenothrin, permethrin, cyphenothrin, cypermethrin, allethrin, prallethrin, furamethrin, imiprothrin, etofenprox and silafluofen, as well as mixtures of the aforementioned substances.

Even more preferred products for repelling, knocking down or killing insects according to the invention are characterized in that the pest control active, preferably the repellent active, is selected from pyrethrum, i.e. the powder made from the dried flower heads of *Chrysanthemum cinerariifolium* or *Chrysanthemum* coccineum, extracts from the flowers of *Chrysanthemum* spp. (formerly *Pyrethrum* spp.), preferably selected from oily extracts of the flowers of *Chrysanthemum* spp. and extracts of the flowers of *Chrysanthemum* spp. with supercritical CO₂, furthermore pyrethrin I, cinerin I, jasmolin I, pyrethrin II, cinerin II, jasmolin II, as well as mixtures of the aforementioned substances. Most preferred products for repelling, knocking down or killing insects according to the invention are characterized in that the pest control active, preferably the repellent active, is selected from prallethrin, imiprothrin, phenothrin, cypermethrin, metofluthrin and geraniol, as well as mixtures of the aforementioned substances.

Further preferred products for repelling, knocking down or killing insects according to the invention are characterized in that they comprise the at least one pest control active in a total amount of 0.01 to 10 weight-%, more preferably in a total amount of 0.05 to 5.0 weight-%, even more preferably in a total amount of 0.05 to 1.0 weight-%, even more preferably in a total amount of 0.05 to 0.5 weight-%, most preferably in a total amount of 0.1 to 0.2 weight-%, all quantities referring to the total weight of the liquid aerosol-forming material in the pressure-resistant container.

Further preferred products for repelling, knocking down or killing insects according to the invention are characterized in that the C3 or C4 alkane or alkene propellant is selected from propane, n-butane, methylpropane, propene, but-1-ene, (2Z)-but-2-ene, (2E)-but-2-ene and 2-methylprop-1-ene, as well as mixtures of these alkanes and alkenes. A specifically preferred C3/C4 propellant according to the invention is LPG, liquefied petroleum gas.

Further preferred products for repelling, knocking down or killing insects according to the invention are characterized in that they comprise the at least one C3/C4 propellant in a total amount of 34.9 to 95 weight-%, more preferably in a total amount of 40 to 90 weight-%, even more preferably in a total amount of 50 to 80 weight-%, even more preferably in a total amount of 55 to 75 weight-%, most preferably in a total amount of 60 to 70 weight-%, all quantities referring to the total weight of the liquid aerosol-forming material in the pressure-resistant container. Most preferred products for repelling, knocking down or killing insects according to the invention are characterized in that they comprise LPG as C3/C4 propellant in a total amount of 34.9 to 95 weight-%, more preferably in a total amount of 40 to 90 weight-%, even more preferably in a total amount of 50 to 80 weight-%, even more preferably in a total amount of 55 to 75 weight-%, most preferably in a total amount of 60 to 70 weight-%, all quantities referring to the total weight of the liquid aerosol-forming material in the pressure-resistant container.

Further preferred products for repelling, knocking down or killing insects according to the invention are characterized in that they comprise 25 to 40 weight-%, preferably 30 to 35 weight-% of propan-2-ol, all quantities referring to the total weight of the liquid aerosol-forming material in the pressure-resistant container.

Preferred products for repelling, knocking down or killing insects according to the invention are characterized in that the anhydrous liquid aerosol-forming material does not comprise in total more than 3 weight-% of substances that are different from components i), ii) and iii) and different from water. That means that the liquid aerosol-forming material, which is anhydrous according to the definition in this specification, essentially consists of the components i), ii) and iii). More preferably, the anhydrous liquid aerosol-forming material does not comprise in total more than 2 weight-% of substances that are different from components i), ii) and iii) and different from water. Even more preferably, the anhydrous liquid aerosol-forming material does not comprise in total more than 2 weight-% of substances that are different from components i), ii) and iii) and different from water. Even more preferably, the anhydrous liquid aerosol-forming material does not comprise in total more than 1 weight-% of substances that are different from components i), ii) and iii) and different from water. Most preferably, the anhydrous liquid aerosol-forming material does not comprise in total more than 0.5 weight-% of substances that are different from components i), ii) and iii) and different from water.

Further preferred products for repelling, knocking down or killing insects according to the invention are characterized in that they comprise the at least one pest control active in a total amount of 0.01 to 10 weight-%, the at least one propellant in a total amount of 45 to 75 weight-% and 25 to 45 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

Further preferred products for repelling, knocking down or killing insects according to the invention are characterized in that they comprise the at least one pest control active in a total amount of 0.05 to 5.0 weight-%, the at least one propellant in a total amount of 50 to 75 weight-% and 25 to 45 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

Further preferred products for repelling, knocking down or killing insects according to the invention are characterized in that they comprise the at least one pest control active in a total amount of 0.05 to 1.0 weight-%, the at least one propellant in a total amount of 54 to 75 weight-% and 25 to 45 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

Further preferred products for repelling, knocking down or killing insects according to the invention are characterized in that they comprise the at least one pest control active in a total amount of 0.05 to 0.5 weight-%, the at least one propellant in a total amount of 55 to 75 weight-% and 25 to 40 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

Further preferred products for repelling, knocking down or killing insects according to the invention are characterized in that they comprise the at least one pest control active in a total amount of 0.1 to 0.2 weight-%, the at least one propellant in a total amount of 60 to 70 weight-% and 30 to 35 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

Additional substances that are different from components i), ii) and iii), can be selected from fragrances in order to provide a product which is sensorially more attractive for the user. Especially preferred products according to invention are characterized in that the anhydrous liquid aerosol-forming material comprises at least one fragrance.

The definition of a "fragrance" for purposes of the present application corresponds to the definition usual in the art, as may be gathered from the ROMPP Chemie Lexikon [Chemistry Lexicon] as of December 2007. According to the latter, a fragrance is a chemical compound having an odor and/or taste that excites the receptors of the hair cells of the olfactory system (adequate stimulus). The physical and chemical properties necessary for this are a low molar mass of at most 300 g/mol, a high vapor pressure, minimal water solubility and high lipid solubility, as well as weak polarity and the presence of at least one osmophoric group in the molecule. In order to distinguish volatile low-molecular-weight substances that are usually (and also for purposes of the present application) viewed and utilized not as fragrances but instead principally as solvents, for example ethanol and acetone, from fragrances according to the present invention, fragrances according to the present invention have a molar mass from 74 to 300 g/mol, contain at least one osmophoric group in the molecule, and have an odor and/or taste, i.e. they excite the receptors of the hair cells of the olfactory system. Perfumes, perfume oils, or perfume oil constituents can be used as fragrances. Perfume oils resp. scents can be, according to the present invention, individual fragrance compounds, e. g. synthetic products of the ester, ether, aldehyde, ketone, alcohol, and hydrocarbon types. Fragrance compounds of the ester type are, for example, benzyl acetate, phenoxyethyl isobutyrate, p-tert-butylcyclohexyl acetate, linalyl acetate, dimethylbenzylcarbinyl acetate (DMBCA), phenylethyl acetate, benzyl acetate, ethylmethylphenyl glycinate, allylcyclohexyl propionate, styr-allyl propionate, benzyl salicylate, cyclohexyl salicylate, floramate, melusate, and jasmecyclate. The ethers include, for example, benzyl ethyl ether and ambroxan; the aldehydes, for example, the linear alkanals having 8 to 18 carbon atoms, citral, citronellal, citronellyloxyacetaldehyde, cyclamenaldehyde, lilial, and bourgeonal; the ketones, for example, the ionones, alpha-isomethylionone und methyl cedryl ketone; the alcohols, anethol, citronellol, eugenol, geraniol, linalool, phenylethyl alcohol and terpineol; and the hydrocarbons include principally the terpenes such as limonene and pinene. Preferably, however, mixtures of different fragrances that together produce an attractive fragrance note are used.

Some of the aforementioned substances are also effective as pest control active. When such a fragrance with pest control effect is present in the inventive product, it is considered and quantified as pest control active.

Further preferred products for repelling, knocking down or killing insects according to the invention are characterized in that the liquid anhydrous aerosol-forming material comprises an oil or oils, which is or are not considered as fragrance and not considered as essential oils, in a total amount of 0 to 3 weight-%, preferably 0 to 2 weight-%, more preferably 0 to 1 weight-%, most preferably 0 to 0.5 weight-%, all quantities referring to the total weight of the liquid aerosol-forming material in the pressure-resistant container. "Essential oils" are understood according to the present invention as mixtures of volatile components that are produced by steam distillation from vegetable raw materials, e. g. citrus oils. "Volatile" components are understood as those components that, at 20°C and an ambient pressure of 1013 hPa, have a vapor pressure from 2.66 Pa to 40,000 Pa (0.02 mm to 300 mm Hg), preferably 10 to 12,000 Pa (0.1 to 90 mm Hg), particularly preferably 13 to 3000 Pa, extraordinarily preferably 15 to 500 Pa.

Oils that are liquid under standard conditions and are not a fragrance and not an essential oil, are preferably selected from silicone oils and non-silicone oils. Preferred silicone oils are selected from cyclotrisiloxane (hexamethylcyclotrisiloxane), cyclotetrasiloxane (octamethylcyclotetrasiloxane), cyclopentasiloxane (decamethylcyclopentasiloxane), cyclohexasiloxane (dodecamethylcyclohexasiloxane) and linear silicone oil, especially polydimethylsiloxanes having at least 2 siloxane units, such as hexamethyldisiloxane, up to 10,000 siloxane units (high-molecular weight polydimethylsiloxane or dimethicone). Preferred non-silicone oils are selected from hydrocarbons with at least 8 carbon atoms, especially C₈ to C₁₆ isoparaffins, mineral oil, polydecene, Vaseline, Vaseline oil, liquid esters of linear or branched, saturated or unsaturated fatty alcohols having 2 to 30 carbon atoms with linear or branched, saturated or unsaturated fatty acids having 2 to 30 carbon atoms, which can be hydroxylated, e. g. isopropyl palmitate, isopropyl stearate, isopropyl myristate, 2-hexyldecyl stearate, 2-hexyldecyl laurate, isodecyl neopentanoate, isononyl isononanoate, 2-ethylhexyl palmitate, and 2-ethylhexyl stearate, furthermore branched saturated or unsaturated fatty alcohols having 6 to 30 carbon atoms, e. g. 2-hexyldecanol, 2-octyldodecanol, 2-ethyhexyl alcohol and isostearyl alcohol.

The repellent effect of the product according to the invention can be augmented by further adding piperonyl butoxide. Therefore, further preferred products for repelling, knocking down or killing insects according to the invention are characterized in that they comprise piperonyl butoxide in an amount of not more than 3 weight-%, preferably in an amount of 0.01 to 0.5 weight-%, referring to the total weight of the liquid aerosol-forming material in the pressure-resistant container.

For the improvement of the application properties, especially with regard to reduction of residues of the spray, it has proven to be beneficial, when the spray valve, the spray button, especially the dimensions of its orifice, and the composition of the anhydrous liquid aerosol-forming material in the pressure-resistant container are coordinated in such a way that the spray produced by the valve from the liquid aerosol-forming material under the standard conditions (confer below) has a volume-based average diameter D[4][3] of from 10 to 55 µm, preferably from 10 to 40 µm, more preferably from 15 to 35 µm, even more preferably from 20 to 30 µm. The standard conditions for determining the diameter D[4][3] of the spray droplets are the following:

| | |
|---|---|
| spray time: | 2 seconds |
| ambient temperature: | 20°C |
| filling pressure of the liquid aerosol-forming material in the pressure-resistant container: | 300 to 500 kPa |
| distance between spray outlet and droplet size measurement: | 20 cm |

Therefore, further preferred products for repelling, knocking down or killing insects according to the invention are characterized in that the spray droplets produced by the valve from the liquid aerosol-forming material under the standard conditions cited above have a volume-based average diameter D[4][3] of from 10 to 55 µm, preferably from 10 to 40 µm, more preferably from 15 to 35 µm, even more preferably from 20 to 30 µm.

The statements made with regard to the products and the anhydrous liquid aerosol-forming material according to the present invention apply mutatis mutandis with regard to preferred embodiments of the use according to the present invention and the method according to the present invention.

### Experimental section

Inventive and comparative examples of liquid aerosol-forming material (quantities in weight-%)

| | inventive compositions | | water-based compositions (non-inventive, comparative) | | oil-based compositions (non-inventive, comparative) | |
|---|---|---|---|---|---|---|
| | Ex. 1 | Ex. 2 | Comp. ex. 1 | Comp. ex. 2 | Comp. ex. 3 | Comp. ex. 4 |
| | weight-% | weight-% | weight-% | weight-% | weight-% | weight-% |
| pest control active* | 0.2 | 0.1 | 0.1 | 0.1 | 0.1 | 0.1 |
| propan-2-ol | 43.7 | 25.9 | - | - | - | - |
| LPG | 56.0 | 74.0 | 36.0 | 47.0 | 72.4 | 55.0 |
| fragrance | 0.1 | - | - | - | - | - |
| water | - | - | 57.1 | 43.8 | - | - |
| mineral oil | - | - | 5.5 | 8.0 | 27.5 | 44.9 |
| emulsifier | - | - | 0.8 | 0.9 | - | - |
| NaCl | - | - | 0.5 | 0.2 | - | - |
| | | | | | | |
| D[4][3] (in µm) | 28.4 | 28.4 | 46.8 | 46.8 | 26.3 | 26.3 |

- for example selected from prallethrin, imiprothrin, phenothrin, cypermethrin, metofluthrin, geraniol, oily extract of pyrethrum, i.e. the powder made from the dried flower heads of *Chrysanthemum cinerariifolium* or *Chrysanthemum* coccineum, permethrin, transfluthrin, N,N-diethyl-3-methylbenzamide (DEET), icaridine (1-piperidinecarboxylic acid 2-(2-hydroxyethyl)-1-methylpropyl ester, KBR 3023), MGK repellent 11 (4,5a,6,9,9a,9b-hexahydro-1*H*-dibenzofuran-4*a*-carbaldehyde) and SS220; as single substance or mixtures thereof

The water-based aerosols have a bigger volume-based average droplet size and this influences their capacity to stay in the air. The droplets deposit faster on surfaces, which will reduce the particles' time in the air and consequently the availability of the active ingredient in the air to reach flying insects.

The efficacy of aerosols which are sprayed directly onto crawling insects is not affected by the time of the particles in the air. But in this case the dry effect benefits are more relevant. Water-based and oil-based products leave wet residues after spraying, leading to highly slippery surfaces which may become risky for the user. At the same time, if objects get in contact with the wet surfaces before they dry out, the formula could also impregnate those objects, which may not be wanted by the user.

The inventive products highly reduce these negative effects as the evaporation of the droplets is much faster.

## Claims

1. A product for repelling, knocking down or killing insects, comprising
a pressure-resistant container equipped with a spray valve and a spray button having a spray outlet connected to the spray valve,
the container containing the liquid aerosol-forming material,
wherein the liquid aerosol-forming material is anhydrous and comprises
i) at least one pest control active,
ii) a propellant, selected from one or more alkanes or alkenes with 3 or 4 carbon atoms each, and
iii) additionally an organic solvent, which essentially consists of propan-2-ol,
**characterized in that** the liquid, anhydrous aerosol-forming material comprises 25 to 45 weight-% of propan-2-ol, all quantities referring to the total weight of the liquid aerosol-forming material in the pressure-resistant container.

2. A product according to claim 1, **characterized in that** the pest control active is selected from metofluthrin, transfluthrin, pyrethrum, i.e. the powder made from the dried flower heads of *Chrysanthemum cinerariifolium* or *Chrysanthemum* coccineum, extracts from the flowers of *Chrysanthemum* spp. (formerly *Pyrethrum* spp.), preferably selected from oily extracts of the flowers of *Chrysanthemum* spp. and extracts of the flowers of *Chrysanthemum* spp. with supercritical CO₂, furthermore pyrethrin I, cinerin I, jasmolin I, pyrethrin II, cinerin II, jasmolin II, pyrethroids, preferably profluthrin, empenthrin, phthalthrin, resmethrin, cyfluthrin, phenothrin, permethrin, cyphenothrin, cypermethrin, allethrin, prallethrin, furamethrin, imiprothrin, etofenprox and silafluofen, furthermore dichlorvos, fenitrothion, propoxur, benzaldehyde, butopyronoxyl, N,N-diethyl-3-methylbenzamide (DEET), N,N-diethyl-phenylacetamide (DEPA), methyl anthranilate, dimethyl carbate (Dimethyl (1R,2S,3R,4S)-bicyclo[2.2.1]hept-5-ene-2,3-dicarboxylate), dimethyl phthalate, 3-[*N*-n-butyl-*N*-acetyl]-aminopropionic acid ethyl ester, icaridine (1-piperidinecarboxylic acid 2-(2-hydroxyethyl)-1-methylpropyl ester, KBR 3023), tricyclodecenyl allyl ether, MGK repellent 11 (4,5*a*,6,9,9*a*,9*b*-hexahydro-1*H*-dibenzofuran-4*a*-carbaldehyde), extracts from *Callicarpa americana* leaves, extracts from *Myrica Gale,* nepetalactone, 2-undecanone, Citronella oil, *Corymbia citriodora* oil, p-menthane-3,8-diol, extracts from lemongrass, neem oil, tea tree oil, tobacco leaves extracts, extracts from Achillea alpina, alpha-terpinene, extracts from Andrographis paniculata, SS220 ((1S,2'S)-Methylpiperidinyl-3-cyclohexen-1-carboxamid)), extracts from *Ocimum basilicum* leaves, male inflorescences of breadfruit (*Artocarpus altilis* (Parkinson) Fosberg), camphor, carvacrol, castor oil, cedar oil, extracts from *Apium graveolens* (celery), leaf oil of *Cinnamomum osmophloeum,* bark oil from *Cinnamomum cassia,* cinnamaldehyde, citronella oil, citronellol, geraniol, D-limonene, essential oils of *Syzygium aromaticum,* Eucalyptus oil, eucalyptol, oil from *Foeniculum vulgare* (fennel), extracts from *Allium sativum,* allicin, essential oils of *Pelargonium graveolens,* hinokitiol, lavender oil, essential oils of *Corymbia citriodora,* p-menthane-3,8-diol, essential oils of *Cymbopogon* species, linalool, extracts from *Tagetes* species, essential oils of *Majorana hortensis,* essential oils of *Rosmarinus officinalis* L., menthol and its isomers, preferably (-)-menthol, neem oil (*Azadirachta indica*), nootkatone, oleic acid, pulegone, menthone, essential oils of *Mentha piperita,* essential oils of *Mentha pulegium,* extracts of *Lantana camara,* preferably oily extracts of *Lantana camara* flowers, essential oils of the leaves of *Melaleuca alternifolia* (Tea tree oil), essential oils of *Thymus* species, juice of *Solanum villosum* berries, as well as mixtures of the aforementioned substances.

3. A product according to claim 1 or 2, **characterized in that** the pest control active, preferably the repellent active, is selected from prallethrin, imiprothrin, phenothrin, cypermethrin, metofluthrin and geraniol, as well as mixtures of the aforementioned substances.

4. A product according to any of claims 1 to 3, **characterized in that** they comprise the at least one pest control active in a total amount of 0.01 to 10 weight-%, more preferably in a total amount of 0.05 to 5.0 weight-%, even more preferably in a total amount of 0.05 to 1.0 weight-%, even more preferably in a total amount of 0.05 to 0.5 weight-%, most preferably in a total amount of 0.1 to 0.2 weight-%, all quantities referring to the total weight of the liquid aerosol-forming material in the pressure-resistant container.

5. A product according to any of claims 1 to 4, **characterized in that** the C3 or C4 alkane or alkene propellant is selected from propane, n-butane, methylpropane, propene, but-1-ene, (2Z)-but-2-ene, (2E)-but-2-ene and 2-methylprop-1-ene, as well as mixtures of these alkanes and alkenes, especially preferred selected from liquefied petroleum gas (LPG).

6. A product according to any of claims 1 to 5, **characterized in that** it comprises 25 to 40 weight-%, preferably 30 to 35 weight-% of propan-2-ol, all quantities referring to the total weight of the liquid aerosol-forming material in the pressure-resistant container.

7. A product according to any of claims 1 to 6, **characterized in that** it comprises the at least one C3/C4 propellant in a total amount of 34.9 to 95 weight-%, more preferably in a total amount of 40 to 90 weight-%, even more preferably in a total amount of 50 to 80 weight-%, even more preferably in a total amount of 55 to 75 weight-%, most preferably in a total amount of 60 to 70 weight-%, all quantities referring to the total weight of the liquid aerosol-forming material in the pressure-resistant container.

8. A product according to any of claims 1 to 7, **characterized in that** it comprises the at least one pest control active in a total amount of 0.05 to 0.5 weight-%, the at least one propellant in a total amount of 55 to 75 weight-% and 25 to 40 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

9. A product according to any of claims 1 to 8, **characterized in that** it comprises the at least one pest control active in a total amount of 0.1 to 0.2 weight-%, the at least one propellant in a total amount of 60 to 70 weight-% and 30 to 35 weight-% of propan-2-ol, wherein the liquid aerosol-forming material does not comprise more than 3 weight-% of substances that are different from components i), ii) and iii) and different from water, all quantities referring to the total weight of the liquid aerosol-forming material in the pressure-resistant container.

10. A product according to any of claims 1 to 9, **characterized in that** the liquid anhydrous aerosol-forming material comprises an oil or oils, which is or are not considered as essential oils, in a total amount of 0 to 3 weight-%, preferably 0 to 2 weight-%, more preferably 0 to 1 weight-%, most preferably 0 to 0.5 weight-%, all quantities referring to the total weight of the liquid aerosol-forming material in the pressure-resistant container.

11. A product according to any of claims 1 to 10, **characterized in that** the spray droplets produced by the valve from the liquid aerosol-forming material under the standard conditions cited in the specification have a volume-based average diameter D[4][3] of from 10 to 55 µm, preferably from 10 to 40 µm, more preferably from 15 to 35 µm, even more preferably from 20 to 30 µm.

12. Use of a product according to any of claims 1 to 11 for repelling, knocking down or killing insects, especially flying and/or crawling insects.

13. Method for repelling, knocking down or killing insects, **characterized in that** an anhydrous liquid aerosol-forming material, comprising
i) at least one pest control active,
ii) a propellant, selected from one or more alkanes or alkenes with 3 or 4 carbon atoms each, and
iii) additionally an organic solvent, which essentially consists of propan-2-ol in a quantity of 25 to 45 weight-%, all quantities referring to the total weight of the liquid aerosol-forming material in the pressure-resistant container,
is set free into a space or onto an inanimate surface to be treated against insects from a pressure-resistant container equipped with a spray valve and a spray button having a spray outlet connected to the spray valve, the container containing the liquid aerosol-forming material.

14. Method for repelling, knocking down or killing insects according to claim 13, **characterized in that** the anhydrous liquid aerosol-forming material is one according to any of claims 2 to 11.

15. Use according to claim 12 or method according to any of claims 13 or 14, wherein the insects are selected from mosquitoes, flies, mites, especially dust mites, fleas, roaches, ticks, ants, moths and/or silverfish.
